# EUROPÄISCHE PATENTSCHRIFT

(11) **EP 0 446 429 B1**
(45) Veröffentlichungstag und Bekanntmachung des Hinweises auf die Patenterteilung: **26.01.1994**
(21) Anmeldenummer: 90122466.7
(22) Anmeldetag: 26.11.1990
(51) Int. Cl.: F16L 5/02, H01B 17/58

(54) **Leitungsdurchführung für durch eine Tragwand hindurchzuführende Leitungen, insbesondere Schlauch- und/oder Rohrleitungen**
Conduit passage through a wall, especially for hoses and/or pipes
Passage de conduites à travers une paroi, en particulier pour des tuyaux souples et/ou rigides

(30) Priorität: 26.02.1990 DE 4005978
(43) Veröffentlichungstag der Anmeldung: 18.09.1991
(73) Patentinhaber: Dr.Ing.h.c. F. Porsche Aktiengesellschaft, 70435 Stuttgart (DE)
(72) Erfinder: Wolkersdorfer, Werner, Dipl.-Ing. (FH), W-7255 Rutesheim (DE); Messner, Ulrich, Dipl.-Ing. (FH), 7251 Mönsheim (DE)

(56) Entgegenhaltungen:
- DE-A- 3 006 794
- DE-A- 3 524 278
- DE-U- 8 428 401
- US-A- 4 165 105
- US-A- 4 656 689

## Beschreibung

Die Erfindung bezieht sich auf eine Leitungsdurchführung an einem Kraftfahrzeug gemäß dem Oberbegriff des Anspruchs 1.

Eine Leitungsdurchführung dieser Art ist aus der DE-A- 35 24 278 bekannt. Nachteilig an dieser Anordnung ist, daß diese Art der Leitungsdurchführung bzw. der Befestigung des Verschlußkörpers an der Tragwand nur bei randoffenen Wandöffnungen einsetzbar ist.

Aufgabe der Erfindung ist es, eine Leitungsdurchführung der eingangs genannten Gattung dahingehend zu verbessern, daß sie auch für umfangsseitig geschlossene Wandöffnungen verwendbar ist, so daß einerseits ein sicheres Festlegen des Verschlußkörpers an der Tragwand erzielt wird und andererseits der Verschlußkörper schnell und ohne zusätzliche Werkzeuge montierbar ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die am Verschlußkörper und an der Wandöffnung angeordneten Profilierungen einerseits eine einfache Montage des Verschlußkörpers und andererseits eine sichere Befestigung des Verschlußkörpers an der Tragwand erzielt wird. Durch die Profilierungen kann der Verschlußkörper auch bei umfangsseitig geschlossene Wandöffnungen verwendet werden. Mittels der angeformten biegsamen Laschen, die mit einem Rand der Wandöffnung zusammenwirken, wird der Verschlußkörper sicher in seiner Einbaulage gehalten.

Ein Ausführungsbeispiel der Erfindung ist in der Zeichnung dargestellt und wird im folgenden näher beschrieben.

Es zeigt:
- Fig. 1: eine Teilvorderansicht auf eine Tragwand eines Fahrzeuges mit einer Wandöffnung,
- Fig. 2: eine Ansicht entsprechend Fig. 1 mit einem in die Wandöffnung eingesetzten Verschlußkörper in Einführstellung,
- Fig. 3: eine Ansicht entsprechend Fig. 1 mit dem in die Wandöffnung eingesetzten Verschlußkörper in Einbaulage,
- Fig. 4: eine Seitenansicht auf den Verschlußkörper und die Tragwand,
- Fig. 5: eine Ansicht in Pfeilrichtung S der Fig. 4 auf den Verschlußkörper,
- Fig. 6: einen Schnitt nach der Linie VI-VI der Fig. 3 in größerem Maßstab,
- Fig. 7: eine Einzelheit X der Fig. 5 in größerem Maßstab,
- Fig. 8: einen Schnitt nach der Linie VIII-VIII der Fig. 3 in größerem Maßstab,
- Fig. 9: eine Ansicht in Pfeilrichtung T der Fig. 4 auf den Verschlußkörper.

Fig .1 zeigt eine Tragwand 1 eines Fahrzeuges, die aus Kunststoff oder Blech gefertigt ist und jede mögliche Lage im Raum einnehmen kann. Im Ausführungsbeispiel wird die Tragwand 1 durch eine etwa aufrechte, querverlaufende Spritz- oder Stirnwand eines Kraftfahrzeuges gebildet.

An der Tragwand 1 ist eine umfangseitig geschlossene Wandöffnung 2 vorgesehen, durch die beispielsweise zwei im Abstand übereinander angeordnete Leitungen 3, 3a hindurchgeführt werden.

Die längliche Wandöffnung 2 weist eine etwa rechteckige Grundform auf, wobei sich die längeren Seiten in Höhenrichtung erstrecken und die kürzeren Seiten in Fahrzeugquerrichtung verlaufen. Die Wandöffnung 2 kann jedoch auch quadratisch, parallelogrammförmig oder dgl. ausgebildet sein. Die Tragwand 1 kann im Bereich der Wandöffnung 2 und im angrenzenden Bereich ebenflächig ausgebildet sein.

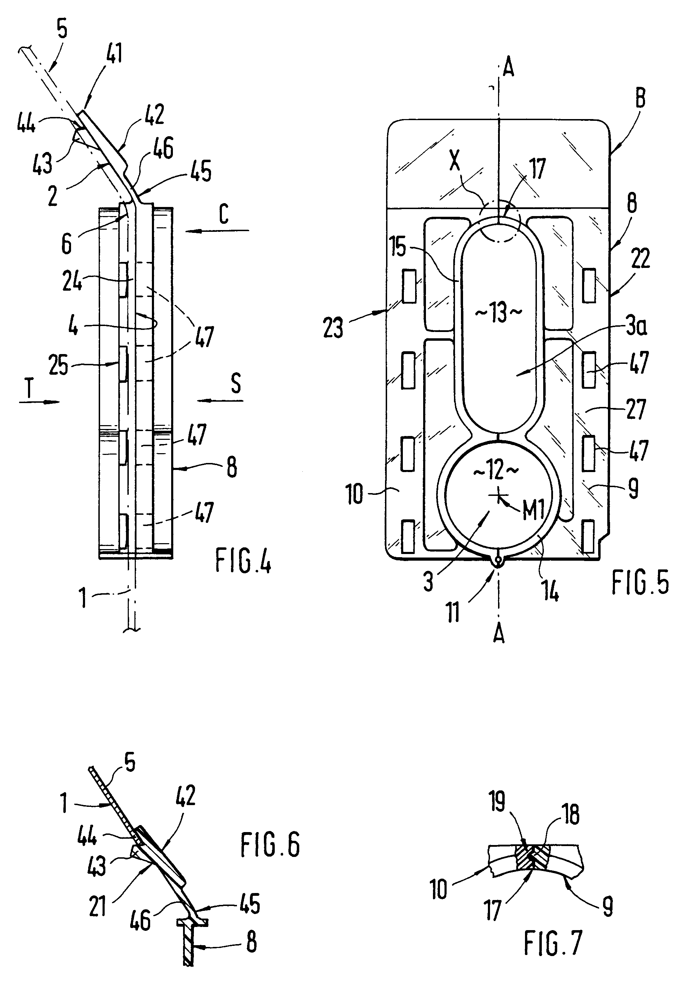

Gemäß Fig. 4 verläuft ein wesentlicher Teil der Höhenerstreckung der Wandöffnung 2 im Bereich eines etwa senkrechten verlaufenden Flächenabschnitts 4, wogegen im angrenzenden, schräg verlaufenden Flächenabschnitt 5 der verbleibende Teil der Wandöffnung 2 vorgesehen ist. Die beiden Flächenabschnitte 4, 5 sind über einen radiusförmigen Übergangsbereich 6 miteinander verbunden (Fig. 4).

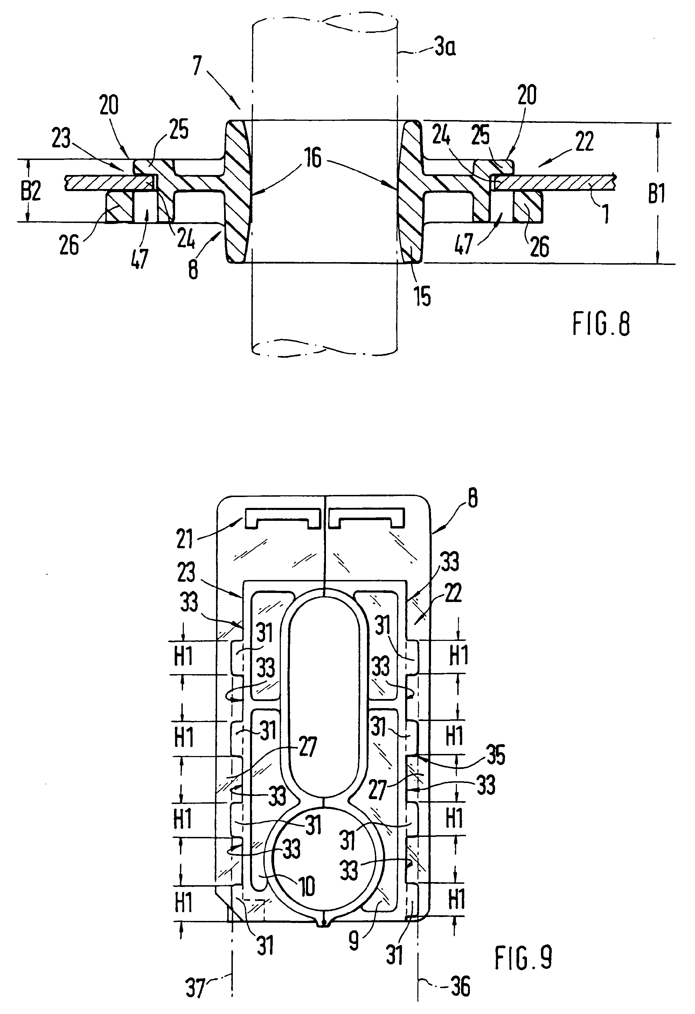

Eine Leitungsdurchführung 7 für die durch die Tragwand 1 hindurchzuführenden Leitungen 3, 3a, insbesondere Schlauch- und/oder Rohrleitungen, umfaßt einen etwa plattenförmigen Verschlußkörper 8, der der Form der Wandöffnung 2 angepaßt und an der Tragwand 1 ohne zusätzliche Befestigungselemente in Lage gehalten ist (Fig. 8).

Der vorzugsweise aus Kunststoff, Gummi oder dgl. gefertigte Verschlußkörper 8 setzt sich aus zwei zusammenklappbaren Hälften 9, 10 zusammen, die an ihrem einen Ende über ein Filmgelenkscharnier 11 miteinander verbunden sind (Fig. 5).

Ferner sind am Verschlußkörper 8 übereinander liegende Aufnahmeabschnitte 12, 13 für die hindurchzuführenden Leitungen 3, 3a vorgesehen (Fig. 5). Der benachbart dem Filmgelenkscharnier 11 angeordnete Aufnahmeabschnitt 12 weist eine Kreisform auf, wobei der Mittelpunkt M1 des Kreises auf einer gemeinsamen Trennebene A-A der beiden Hälften 9, 10 liegt. Der darüberliegende Aufnahmeabschnitt 13 weist die Form einer länglichen Schlitzöffnung auf.

Die Ausbildung und Anzahl der Aufnahmeabschnitte 12, 13 richtet sich nach den durch die Tragwand 1 hindurchzuführenden Leitungen 3.

In zusammengeklappter Einbaulage B der beiden Hälften 9, 10 des Verschlußkörpers 8 verlaufen umfangsseitig um die beiden Aufnahmeabschnitte 12, 13 kragenartige Stege 14, 15, die etwa senkrecht zur Tragwand 1 ausgerichtet sind (Fig. 5). Die Stege 14, 15 weisen eine größere Breite B1 auf, als die Breite B2 des plattenförmigen Bereiches des Verschlußkörpers 8 (Fig. 8). Die Stege 14, 15 überragen die Tragwand 1 zu beiden Seiten hin. Die kragenförmigen Stege 14, 15 liegen dicht, d.h., unter geringer Vorspannung, an der Außenseite der hindurchgeführten Leitungen 3, 3a an, so daß eine Abdichtung zwischen dem Verschlußkörper 8 und den Leitungen 3, 3a erfolgt.

Im Querschnitt gesehen weist die an der Leitung 3, 3a anliegende Fläche 16 der Stege 14, 15 eine ballige Form auf (Fig. 8). Benachbart einem obenliegenden Endbereich des Steges 15 ist zwischen den Hälften 9, 10 eine Zentriereinrichtung 17 vorgesehen (Fig. 5). Die Zentriereinrichtung setzt sich aus einer Anformung 18 an der einen Hälfte 9 zusammen, wobei die Anformung 18 in Einbaulage B des Verschlußkörpers 8 in eine Aufnahme 19 der anderen Hälfte 10 hineinragt (Fig. 7). Im Ausführungsbeispiel sind Anformung 18 und Aufnahme 19 im Querschnitt gesehen etwa dreieckförmig ausgebildet.

Der Verschlußkörper 8 ist mit seitlichen Führungselementen 20 in die Wandöffnung 2 einschiebbar und in dieser mittels eines Haltegliedes 21 festlegbar.

Die seitlichen Führungselemente 20 sind vorzugsweise an den beiden aufrecht verlaufenden Umfangsbereichen 22, 23 des Verschlußkörpers 8 ausgebildet und weisen je eine Führungsnut 24 auf, die von zwei mit Abstand zueinander angeordneten Schenkeln 25, 26 gebildet ist (Fig. 8). Die beiden Schenkel 25, 26 liegen an gegenüberliegenden Seiten am Randabschnitt der Wandöffnung 2 an und umgreifen den Randabschnitt abschnittsweise. Der Schenkel 26, der durch eine durchgehende aufrechte Abstellung 27 gebildet wird, umgreift den Randabschnitt der Wandöffnung 2 um einen größeren Betrag als der gegenüberliegende kürzere Schenkel 25. Der lichte Abstand zwischen den beiden Schenkeln 25, 26 ist geringfügig größer als die Dicke der Tragwand 1.

Damit ein einfaches Einführen des Verschlußkörpers 8 in die Wandöffnung 2 von einer Seite der Tragwand 1 her möglich ist, sind zumindest die in Einführrichtung C gesehen der Tragwand 1 näherliegenden Schenkel 25 der seitlichen Führungselemente 20 des Verschlußkörpers 8 und die korrespondierenden Randabschnitte 28, 29 der Wandöffnung 2 mit einer durch vorstehende Bereiche 30, 31 und dazwischenliegende Aussparungen 32, 33 gebildeten Profilierung 34, 35 versehen.

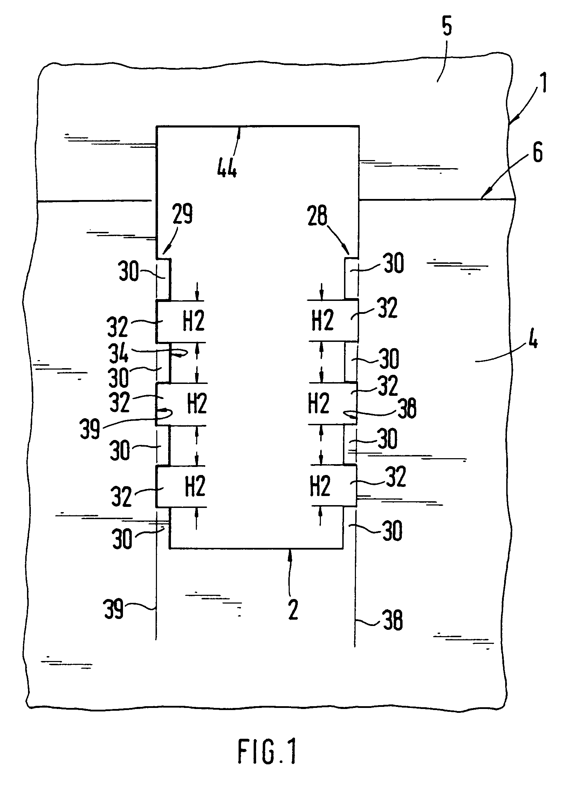

Gemäß Fig. 1 sind zu beiden Längsseiten 28, 29 der Wandöffnung 2 mehrere übereinanderliegende vorstehende Bereiche 30 vorgesehen, wobei zwischen zwei benachbarten vorstehenden Bereichen 30 jeweils eine Aussparung 32 verläuft. Die vorstehenden Bereiche 30 und die Aussparungen 32 sind entsprechend Fig. 1 etwa rechteckförmig ausgebildet. Die dem Verschlußkörper 8 zugeordneten Aussparungen 33 und die vorstehenden Bereiche 31 weisen eine korrespondierende Form auf (Fig. 9). Es besteht jedoch die Möglichkeit, daß die Aussparungen 32, 33 und vorstehenden Bereiche 30, 31 quadratisch, dreieckig, halbkreisförmig oder dgl. ausgebildet sind.

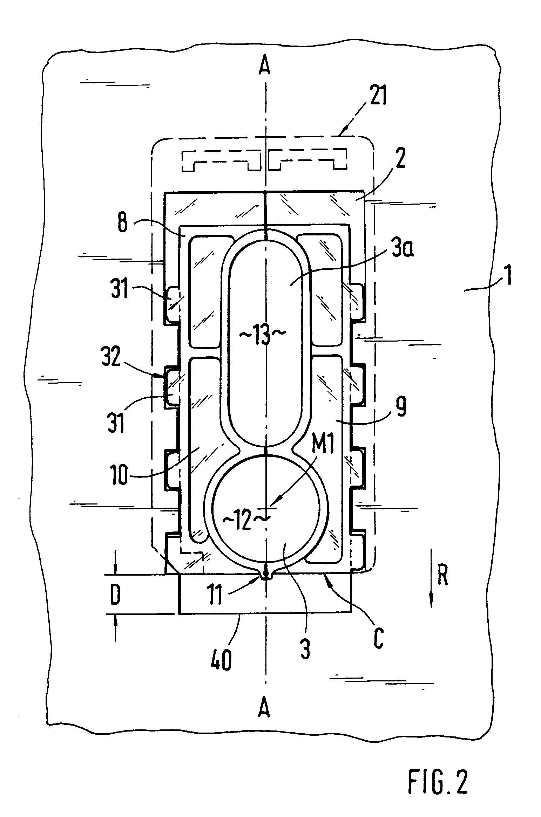

Ein seitliches Einführen des Verschlußkörpers 8 in die Wandöffnung 2 der Tragwand 1 wird dadurch ermöglicht, daß die mit den Aussparungen 32 der Wandöffnung 2 zusammenwirkenden vorstehenden Bereiche 31 des Verschlußkörpers 8 eine geringere Höhe H1 aufweisen als die Höhe H2 der Aussparungen der Wandöffnung 2 beträgt. Ferner ist in Querrichtung gesehen zwischen den Außenkanten 36, 37 der vorstehenden Bereiche 31 und dem Grund 38, 39 der Aussparung 32 ein geringer Freiraum (Spalt) vorgesehen. In der Einführstellung C verläuft der Verschlußkörper 8 mit Abstand D zur unteren Begrenzungskante 40 der Wandöffnung 2 (Fig. 2). Dabei fluchten die vorstehenden Bereiche 31 des Verschlußkörpers mit den Aussparungen 32 der Wandöffnung 2.

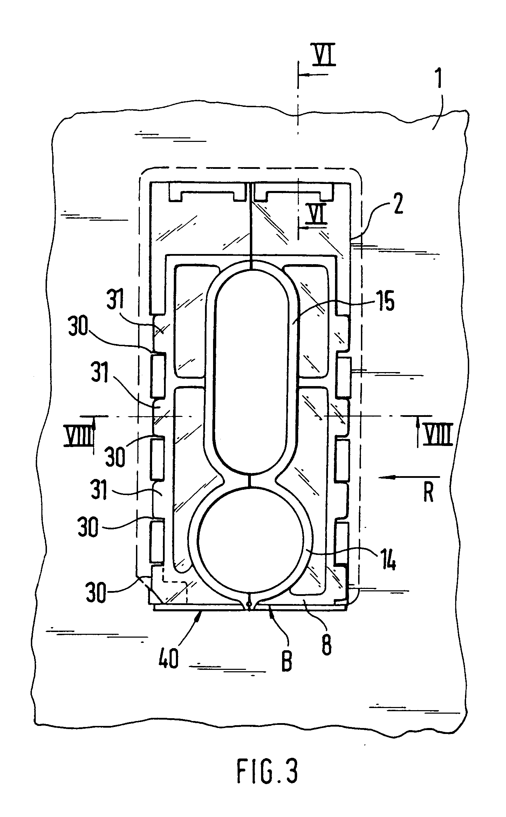

Durch Verschieben des Verschlußkörpers 8 in Pfeilrichtung R um das Maß "D" erfolgt eine Arretierung des Verschlußkörpers 8 an der Tragwand 1, wobei diese Stellung in Fig. 3 dargestellt ist und die Einbaulage B kennzeichnet. Dabei stützt sich der Verschlußkörper 8 an der unteren Begrenzungskante 40 der Wandöffnung 2 ab und die seitlichen vorstehenden Bereiche 31 des Verschlußkörpers 8 hintergreifen die vorstehenden Bereiche 30 der Wandöffnung 2.

Zur zusätzlichen Fixierung des Verschlußkörpers 8 in der Wandöffnung 2 sind auf der dem Filmgelenkscharnieren 11 abgekehrten Seite 41 des Verschlußkörpers 8 an beiden Hälften 9, 10 Halteglieder 21 vorgesehen, die durch angeformte biegsame Laschen 42 gebildet werden.

Diese biegsamen Laschen 42 stehen unter Vorspannung zur Tragwand 1 und weisen im Bereich ihres freien Endes angeformte Rastnasen 43 auf, die einen oberen Rand 44 der Wandöffnung 2 hintergreifen (Fig. 6).

Die Bewegbarkeit der Laschen 42 wird dadurch erzielt, daß die Laschen 42 oberhalb des plattenförmigen Bereichs bei 45 eine Querschnittsverringerung 46 aufweisen, die als Scharnier wirkt.

Aus Fertigungsgründen können am Schenkel 26 örtlich Durchbrüche 47 vorgesehen werden, die gemäß den Fig. 5 und 8 etwa deckungsgleich mit den vorstehenden Bereichen 31 des Verschlußkörpers 8 angeordnet sind.

## Patentansprüche

1. Leitungsdurchführung (7) an einem Kraftfahrzeug, bestehend aus einem Verschlußkörper (8) und einer Tragwand (1), wobei der Verschlußkörper (8) mindestens einen Aufnahmeabschnitt (12,13) zum abgedichteten Hindurchführen einer Leitung (3, 3a), insbesondere Schlauch- und/oder Rohrleitung, aufweist und der Verschlußkörper (8) mit seitlichen Führungselementen (20) in eine Wandöffnung (2) der Tragwand (1) einschiebbar und in dieser mittels eines Haltegliedes (21) festlegbar ist und daß jedes seitliche Führungselement (20) eine Führungsnut (24) aufweist, die durch zwei mit Abstand zueinander verlaufende Schenkel (25, 26) gebildet ist, welche am Randabschnitt der Wandöffnung (2) anliegen und den Randabschnitt abschnittsweise übergreifen, dadurch gekennzeichnet, daß zumindest die - in Einführrichtung C gesehen - der Tragwand (1) zugekehrten Schenkel (25) der seitlichen Führungselemente (20) des Verschlußkörpers (8) und die korrespondierenden Randabschnitte (28,29) der Wandöffnung (2) mit je einer durch vorstehende Bereiche (30, 31) und dazwischenliegende Aussparungen (32, 33) gebildeten Profilierung (34, 35) versehen sind, wobei die Profilierungen (34, 35) von Verschlußkörper (8) und Wandöffnung (2) dergestalt miteinander zusammenwirken, daß einerseits ein Einsetzen des Verschlußkörpers (8) von der Seite her und andererseits durch eine Verschiebewegung des Verschlußkörpers (8) eine Arretierung des Verschlußkörpers (8) an der Tragwand (1) erreichbar ist.

2. Leitungsdurchführung nach Anspruch 1, dadurch gekennzeichnet, daß die Aussparungen (32, 33) ud die vorstehenden Bereiche (30, 31), des Verschlußkörpers (8) und der Wandöffnung (2) etwa rechteckförmig ausgebildet sind.

3. Leitungsdurchführung nach Anspruch 1, dadurch gekennzeichnet , daß die vorstehenden Bereich (31) des Verschlußkörpers (8) eine geringere Höhe (H1) aufweisen als die Höhe (H2) der korrepondierenden Aussparungen (32) an der Wandöffnung (2).

4. Leitungsdurchführung nach Anspruch 3, dadurch gekennzeichnet, daß in der Einbaulage (B) die vorstehenden Bereiche (31) des Verschlußkörpers (8) mit dem vorstehenden Bereich (30) der Wandöffnung (2) zusammenwirken.

5. Leitungsdurchführung nach Anspruch 1, dadurch gekennzeichnet, daß die beiden Hälften (9, 10) des Verschlußkörpers (8) auf der einem Filmgelenkscharnier (11) abgekehrten Seite über eine Zentriereinrichtung (17) zusammenwirken.

6. Leitungsdurchführung nach Anspruch 5, dadurch gekennzeichnet, daß die Zentrieeinrichtung (17) benachbart einer gemeinsamen Trennebene (A-A) vorgesehen ist und durch eine an der Hälfte (9) angeordnete Anformung (18) gebildet wird, die in eine Aufnahme (19) der anderen Hälfte eingreift.

7. Leitungsdurchführung nach Anspruch 1, dadurch gekennzeichnet, daß an beiden Hälften (9, 10) des Verschlußkörpers (8) durch angeformte biegsame Laschen (42) gebildete Halteglieder (21) vorgesehen sind.

8. Leitungsdurchführung nach Anspruch 7, dadurch gekennzeichnet, daß die biegsamen Laschen (42) im Bereich ihres freien Endes angeformte Rastnasen (43) aufweisen, die einen oberen Rand (44) der Wandöffnung (2) hintergreifen.

## Claims

1. Conduit passage (7) in a motor vehicle, consisting of a closure body (8) and a supporting wall (1), wherein the closure body (8) has at least one receiving part (12, 13) for sealed passage therethrough of a conduit (3, 3a), particularly a hose and/or pipe, and the closure body (8) can be pushed with lateral guide elements (20) into an opening (2) in the supporting wall (1) and can be fixed in the said opening by means of a retaining member (21), and each lateral guide element (20) has a guide groove which is formed by two spaced flanks (25, 26) which abut the edge portion of the opening (2) and engage over the edge portion in sections, characterised in that at least the flank (25) of the lateral guide elements (20) of the closure body (8) facing the supporting wall (1) - when viewed in the direction of insertion C - and the corresponding edge portions (28, 29) of the wall opening (2) are each provided with a profile (34, 35) formed by projecting portions (30, 31) and recesses (32, 33) lying therebetween, the profiles (34, 35) of the closure body (8) and of the wall opening (2) cooperating with one another in such a way that on the one hand the closure body (8) can be inserted from the side and on the other hand the closure body (8) can be locked to the supporting wall (1) by a displacement movement of the closure body (8).

2. Conduit passage according to Claim 1, characterised in that the recesses (32, 33) and the projecting portions (30, 31) of the closure body (8) and of the wall opening (2) are of approximately rectangular construction.

3. Conduit passage according to Claim 1, characterised in that the projecting portions (31) of the closure body (8) are of a lesser height (H1) than the height (H2) of the corresponding recesses (32) at the opening (2).

4. Conduit passage according to Claim 3, characterised in that in the fitted position (B) the projecting portions (31) of the closure body (8) co-operate with the projecting portion (30) of the wall opening (2).

5. Conduit passage according to Claim 1, characterised in that the two halves (9, 10) of the closure body (8) cooperate on the side facing away from a film hinge (11) by means of a centring device (17).

6. Conduit passage according to Claim 5, characterised in that the centring device (17) is provided adjacent to a common plane of separation (A-A) and is formed by a projection (18) on the half (9) which engages in a depression (19) in the other half.

7. Conduit passage according to Claim 1, characterised in that retaining members (21) formed by integrally-moulded flexible tabs (42) are provided on both halves (9, 10) of the closure body (8).

8. Conduit passage according to Claim 7, characterised in that the flexible tabs (42) have detents (43) integrally moulded in the region of the free end thereof which engages behind an upper edge (44) of the wall opening (2).

## Revendications

1. Passage de tuyauterie (7) dans un véhicule automobile, constitué d'un corps de fermeture (8) et d'une paroi de support (1), le corps de fermeture (8) comportant au moins une portion de logement (12, 13) pour le passage étanche d'une tuyauterie (3, 3a), en particulier une tuyauterie souple et/ou rigide, et le corps de fermeture (8) pouvant être introduit avec des éléments de guidage (20) latéraux dans une ouverture (2) de la paroi de support (1) et fixé dans celle-ci au moyen d'un organe de fixation (21) et en ce que chaque élément de guidage (20) latéral présente une rainure de guidage (24) qui est formée par deux ailes (25, 26) espacées l'une de l'autre, qui s'appliquent sur la partie de bordure de l'ouverture (2) de la paroi et passent par endroits sur la partie de bordure, caractérisé en ce qu'au moins les ailes (25) tournées vers la paroi de support (1) - vues dans le sens d'introduction (C) - des éléments de guidage (20) latéraux du corps de fermeture (8) et les parties de bordure (28, 29) correspondantes de l'ouverture (2) de la paroi sont pourvues chacune d'un profilage (34, 35) formé par des zones saillantes (30, 31) et des découpes (32, 33) placées entre celles-ci, les profilages (34, 35) du corps de fermeture (8) et de l'ouverture (2) de la paroi coopérant entre eux de manière que d'une part il soit possible d'introduire le corps de fermeture (8) à partir du côté et d'autre part de bloquer le corps de fermeture (8) contre la paroi de support (1), par coulissement du corps de fermeture (8).

2. Passage de tuyauterie selon la revendication 1, caractérisé en ce que les découpes (32, 33) et les zones (30, 31) saillantes du corps de fermeture (8) et de l'ouverture (2) de la paroi sont à peu près rectangulaires.

3. Passage de tuyauterie selon la revendication 1, caractérisé en ce que les zones (31) saillantes du corps de fermeture ont une hauteur (H1) inférieure à la hauteur (H2) des découpes (32) correspondantes de l'ouverture (2) de la paroi.

4. Passage de tuyauterie selon la revendication 3, caractérisé en ce qu'en position de montage (B) les zones (31) saillantes du corps de fermeture (8) coopèrent avec la zone (30) saillante de l'ouverture (2) de la paroi.

5. Passage de tuyauterie selon la revendication 1, caractérisé en ce que les deux moitiés (9, 10) du corps de fermeture (8) coopèrent sur le côté tourné à l'opposé d'une charnière d'articulation en pellicule (11), par un dispositif de centrage (17).

6. Passage de tuyauterie selon la revendication 5, caractérisé en ce que le dispositif de centrage (17) est prévu à côté d'un plan de séparation (A-A) commun et est formé par un relief (18) prévu sur la moitié (9) qui s'engage dans un logement (19) de l'autre moitié.

7. Passage de tuyauterie selon la revendication 1, caractérisé en ce que sur les deux moitiés (9, 10) du corps de fermeture (8) sont prévus des organes de fixation (21) formés par des pattes (42) flexibles formées d'un seul tenant.

8. Passage de tuyauterie selon la revendication 7, caractérisé en ce que les pattes (42) flexibles présentent, dans la zone de leur extrémité libre, des ergots d'arrêt (43) formés d'un seul tenant, qui passent derrière un bord (44) supérieur de l'ouverture (2) de la paroi.
